Europäisches Patentamt

**European Patent Office**

Office européen des brevets

(11) Publication number: **0 040 550**
**B1**

(12) **EUROPEAN PATENT SPECIFICATION**

(45) Date of publication of patent specification: **18.07.84**

(51) Int. Cl.³: **F 16 C 1/22**

(21) Application number: **81302242.3**

(22) Date of filing: **20.05.81**

(54) Improvements in control cable apparatus.

(30) Priority: **20.05.80 GB 8016622**

(43) Date of publication of application:
**25.11.81 Bulletin 81/47**

(45) Publication of the grant of the patent:
**18.07.84 Bulletin 84/29**

(84) Designated Contracting States:
**GB**

(56) References cited:
**FR - A - 2 450 373**
**GB - A - 1 409 527**

**ENGINEERING, vol. 220, no. 4, April 1980,**
**London, GB "Bowdeness cable conduit", page**
**402**

(73) Proprietor: **PARSONS CONTROLS LIMITED**
**Stourport on Severn**
**Stourport Worcestershire DY13 9AT (GB)**

(72) Inventor: **Arnold, Edward James**
**36 Malvern Road**
**St. Johns Worcester (GB)**
Inventor: **Lacey, Roger Anthony**
**4 New Inn Lane**
**Shrawley Worcestershire (GB)**

(74) Representative: **Lewis, David Overington**
**c/o Babcock International Ltd. Cleveland House**
**19 St. James's Square**
**London SW1Y 4LN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to control cable apparatus having a control cable axially movable within and relative to a flexible wire wound conduit and, more particularly, to means for restraining movement of the conduit relative to a bulkhead or bracket through which the conduit passes.

In UK Patent Specification No. 1 409 527 there is described control cable apparatus having a control cable axially movable within and relative to a flexible conduit formed by a closely helically wound wire providing an externally threaded configuration. An elastically deformable, internally threaded, adjustment member is provided to make screw engagement with the conduit and to transmit reaction forces on the conduit to fixtures. By screwing the adjustment member along the conduit the effective length of the conduit may be adjusted. Whilst such an internally threaded adjustment member should be capable of being easily rotated to effect adjustment it should be held sufficiently firmly to prevent it from easily moving out of the adjusted position, e.g. under vibration. This is achieved by forming the adjustment member so as to bind on the conduit. The binding action is achieved either by forming the internal thread of the adjustment member of a pitch different from that of the external thread of the conduit or by providing the adjustment member with a slotted portion within which the bore tapers so that such portion elastically grips the conduit when the adjustment member is screwed thereupon.

In the April 1980 edition (Vol 220 No. 4) of Engineering at page 402 the foregoing arrangement is disclosed with a tapered, slotted portion of the adjustment member positioned within a frusto-conical bore of an abutment member arranged non-rotatably to engage a cable slot in a bracket. The taper and cone configuration produces a gripping force on the conduit by the adjustment member.

According to the present invention there is provided control cable apparatus having a control cable axially movable within and relative to a flexible wire wound conduit provided with an adjustment member having a central bore formed with an internal thread corresponding to an external form on the wire wound conduit and an abutment member having a central bore arranged slidably to accommodate the wire wound conduit, the abutment member being arranged to non-rotatably abut a bulkhead or bracket and the adjustment member and abutment member being arranged separably to engage together which is characterised in that means restraining relative angular and axial movement between the adjustment member and the abutment member include a multiplicity of axially extending faces and a radially extending flange formed on the adjustment member and, formed on the abutment member, resilient shroud having enlargements with internal faces registerable with the axially extending faces on the adjustment member and opposed faces on the enlargements and on a platform extending perpendicular to the central bore axis abuttable with forward and rearward faces of the radially extending flange on the adjustment member.

The invention will now be described, by way of example, with reference to the accompanying isometric view of a restraint device 2 for a wire wound conduit 4 of a control cable 6 including an abutment member 8 and an adjustment member 10 each formed in acetal resin material and penetrated by a central bore. The bore of the adjustment member 10 is internally moulded with a thread form adapted to co-act with and run freely on convolutions formed in winding the wire wound conduit 4 whilst the bore of the abutment member 8 is of a diameter greater than that of the conduit.

The abutment member 8 is formed with a stem 12 extending co-axially with the central bore, and provided with an axial lug 14 to engage a slotted aperture of corresponding form in a bulkhead or bracket (not shown), to prevent rotation of the abutment member. A head portion of the stem is formed with a boss 16 carrying a shroud 18 extending co-axially of the central bore formed by two diametrically opposed webs extending axially from the boss to a cylindrical portion 20 formed internally with two, diametrically opposed, enlargements 21 having flat faces 22. The boss 16 is cut away adjacent the webs leaving a platform 23, to enhance flexibility of the webs.

The adjustment member 10 includes a body portion formed with a scalloped surface 24 coaxial of the central bore and an end extension 26 having an intermediate portion 28 formed with six, equiangularly spaced, flat faces 30 and an outer portion formed as a cylindrical flange 32 stepped outwardly from the intermediate portion and cut away to provide two, diametrically opposed flat faces 34 registering with the internal flat faces 22 formed on the shroud of the abutment member.

In operation, the adjustment member 10 is threaded, and the abutment member 8 slid, onto the control cable conduit 4, and an end portion of the conduit is passed through the aperture in the bulkhead or bracket. The abutment member 8 is then slid with the axial lug 14 on the stem 12 engaging in the slotted portion of the aperture and the adjustment member 10 is rotated to a position adjoining the abutment member giving a location of the conduit approximating to that required. The conduit and adjusting member are then moved axially to engage the cylindrical flange 32 and the intermediate portion 28 of the adjusting member within the shroud 18 of the abutment member, initially registering the two diametrically opposed flat faces 34, 22 on the respective members to permit the engagement. The axial movement is continued such that the intermediate portion 28 of the adjusting member, formed with the six, equiangularly spaced, flat faces 30, registers with the cylindrical portion 20 of the shroud on the abutment member formed internally with the two diametrically opposed, flat faces 20 and the adjusting member rotated through 60°. There is sufficient resilience in the shroud 18 to permit elastic deformation and thereby permit rotation of the adjustment member 10 relative to the abutment member 8 even though the diametrical dimension between opposed arises between the six equiangularly spaced flat faces 30 on the adjustment member is greater than the diametrical dimension between the two diametrically opposed flat faces 22 on the abutment member in an undeformed configuration. Thus, since rotation of the abutment member is prevented by virtue of engagement of the axial lug with the slotted portion of the aperture in the bulkhead or bracket and axial movement of the abutment member in one direction is prevented by virtue of the abutment member abutting the bulkhead or bracket and since the adjustment member is restrained from rotation relative to the abutment member by virtue of engagement between the two, diametrically opposed flat faces 22 on the abutment member with two corresponding faces of the six, equiangularly spaced, faces 30 on the adjustment and restrained from axial movement relative to the abutment member by virtue of engagement of the cylindrical flange 32 on the adjustment member with the platform 23 and the enlargements 21 of the cylindrical portion 20 of the shroud 18 of the abutment member, axial movement of the wire wound conduit 4 in one direction is restrained.

If it is desired additionally to restrain axial movement of the wire wound conduit in the other direction a second abutment member and second adjustment member having effect in that direction may be provided, with the second abutment member abutting and engaging a second bulkhead or bracket. Alternatively, a further abutment member may be formed with a socket to non-rotatably engage the stem portion of a first abutment member protruding through a bulkhead or bracket such that the first and further abutment members abut either side of the bulkhead or bracket.

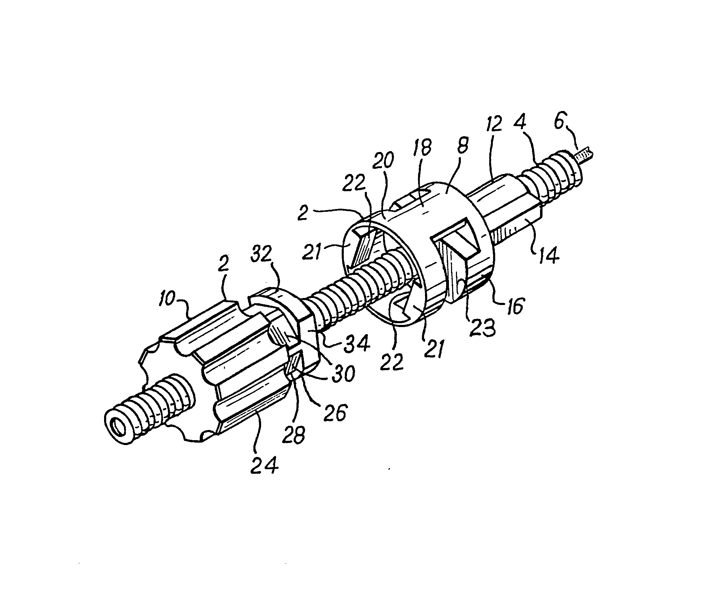

## Claims

1. Control cable apparatus having a control cable (6) axially movable within and relative to a flexible wire wound conduit (4) provided with an adjustment member (10) having a central bore formed with an internal thread corresponding to an external thread form on the wire wound conduit and an abutment member (8) having a central bore arranged slidably to accommodate the wire wound conduit, the abutment member being arranged to non-rotatably abut a bulkhead or bracket and the adjustment member and abutment member being arranged separably to engage together, characterised in that means restraining relative angular and axial movement between the adjustment member and the abutment member include a multiplicity of axially extending faces (30) and a radially extending flange (32) formed on the adjustment member and, formed on the abutment member, a resilient shroud (18) having enlargements (21) with internal faces (22) registerable with the axially extending faces (30) on the adjustment member and opposed faces on the enlargements (21) and on a platform (23) extending perpendicular to the central bore axis abuttable with forward and rearward faces of the radially extending flange (30) on the adjustment member.

2. Control cable apparatus as claimed in Claim 1, wherein the shroud (18) of the abutment member (8) is formed with two, diametrically opposed, internal faces (22) and the cylindrical flange (32) on the adjustment member is cut away to form flat faces (34) to permit passage of the cylindrical flange past the two, diametrically opposed faces.

3. Control cable apparatus as claimed in Claim 2, wherein the two, diametrically opposed, internal faces (22) on the shroud are formed on lugs (21) projecting inwardly from the shroud (18).

4. Control cable apparatus as claimed in any preceding claim, wherein the shroud (18) includes a cylindrical portion (20) supported on two, diametrically opposed, webs from a boss portion (16) of the abutment member.

5. Control cable apparatus as claimed in Claim 4, wherein the boss portion (16) of the abutment member includes a platform (23) spaced from the webs to form one of the said faces extending perpendicular to the central bore axis.

6. Control cable apparatus as claimed in any preceding claim, wherein the abutment member is formed of a plastics material having resilient properties.

7. Control cable apparatus as claimed in any preceding claim, wherein the adjustment member is formed of a plastics material having resilient properties.

## Revendications

1. Appareil à câble de commande comportant un câble de commande (6) pouvant se mouvoir axialement dans et par rapport à un conduit flexible (4) en fil bobiné, pourvu d'un organe de régle (10) ayant un alésage central formé avec un filetage interne correspondant à un filetage externe formé sur le conduit en fil bobiné, et un organe de butée (8) ayant un alésage central aménagé pour accueillir avec possibilité de coulissement le conduit en fil bobiné, l'organe de butée étant aménagé pour buter sans rotation contre une cloison ou un support, et les organes de réglage et de butée étant aménagés pour s'engager ensemble de façon séparable, caractérisé en ce qu'un moyen de limitation de mouvement angulaire et axial relatif entre l'organe de réglage et, formée sur l'organe de butée, un voile élastique (18) ayant des épaulements (21) aved des faces internes (22) adaptées à coopérer avec les surfaces s'étendant axialement (30) sur l'organe de réglage et des faces opposées des épaulements (21) et d'une plateforme (23) s'étendant perpendiculairement à l'axe de l'alésage central étant adaptées à venir en butée avec des faces qu'un côté quelconque de la bordure d'orientation radiale de l'organe de réglage.

2. Appareil à câble de commande selon la revendication 1, où le voile (18) de l'organe de butée (8) est formé avec deux faces internes (22) diamétralement opposées, tandis que la bordure cylindrique (32) de l'organe de réglage est découpée de façon à former des faces planes (34) pour permettre à la bordure cylindrique de franchir les deux faces diamétralement opposées.

3. Appareil à câble de commande selon la revendication 2, où les deux faces internes (22) diamétralement opposées sur le voile sont formées sur les épaulements (21) s'étendant intérieurement à partir du voile (18).

4. Appareil à câble de commande selon l'une quelconque des revendications précédentes, où le voile (18) comprend une portion cylindrique (20) supportée sur deux joues diamétralement opposées, provenant d'une partie (16) formant une partie bossage de l'organe de butée.

5. Appareil à câble de commande selon la revendication 4, où la partie bossage (16) de l'organe de butée comprend une plateforme (23) espacée des joues pour former l'une desdites faces s'étendant perpendiculairement à l'axe de l'alésage central.

6. Appareil à câble de commande selon l'une quelconque des revendications précédentes, où l'organe de butée est formé dans un matériau plastique ayant des propriétés élastiques.

7. Appareil à câble de commande selon l'une quelconque des revendications précédentes, où l'organe de réglage est formé dans un matériau plastique ayant des propriétés élastiques.

## Patentansprüche

1. Regelkabelgerät mit einem Kontrollkabel (6) bewegbar in Achsrichtung innerhalb und entgegen einem biegsamen drahtgewundenem Rohr (4) mit einem Ajustierglied (10) mit Zentralbohrung mit Innengewinde passend zu dem Aussengewinde des drahtgewundenen Rohres und einem Anstossglied (8) mit Zentralbohrung verschiebbar angebracht um das drahtgewundene Rohr aufnehmen zu können, in dem das Anstossglied dabei unumgleitbar an einen Anschlag oder eine Konsole stösst und das Ajustierglied und das Anstossglied getrennt so angeordnet sind, dass sie miteinander rasten, gekennzeichnet darin dass Mittel die gleichaschsige oder ach sabweichende Bewegungen zwischen Ajustierglied und Anstossglied verhindernd eine Mehrzahl von in Achsrichtung sich erstreckenden Stossflächen (30) und in Radialrichtung erstreckenden Flansch (31) auf dem Anstossglied geformt einschliessen sowie, auf dem Ajustierglied geformt, eine elastische Hülle (18) mit Erweiterungen (21) mit Innenflächen (22) welche mit den in Achrichtung sich erstreckenden Flächen (30) auf dem Ajustierglied und auch mit den Gegenflächen auf den Erweiterungen (21) und mit einer Platform (23) welche rechtwinklig zur Zentralöffnung achsanstossbar mit Stossflächen beiderseitig des sich radial erstreckenden Flansch (30) auf dem Ajustierglied spielen können.

2. Regelkabelgerät nach Anspruch 1 in dem Hülle (18) auf dem Anstossglied (8) mit zwei diametrisch entgegengesetzten Anstossflächen (22) geformt ist und der zylindrische Flansch (32) auf dem Ajustierglied fazettiert ist sodass ebene Flächen erlauben.

3. Regelkabelgerät nach Anspruch 2 in dem die zwei diametrisch entgegengesetzten Innenflächen (22) auf der Hülle auf Bossen (21) welche nach innen von der Hülle auf Bossen (21) welche nach innen von der Hülle (18) vorstossen, geformt sind.

4. Regelkabelgerät nach einem der vorhergehenden Ansprüchen indem die Hülle einen Zylinderteil (20) enthält welcher auf zwei diametrische gegeneinander gesetzten Geweben von dem Bossteil (16) des Anssstossgliedes getragen wird.

5. Regelkabelgerät nach Anspruch 4 in welchem das Bossteil (16) des Anstossgliedes eine Platform (22) auf einem Abstand vom Gewebe einschliesst um so eine der genannten Flächen zu formen welche sich rechtwinklig zur Achse der Zentralbohrung erstreckt.

6. Regelkabelgerät nach einem der vorhergehenden Ansprüchen in dem das Anstossglied aus plastischen Materialien mit elastischen Eigenschaften geformt ist.

7. Regelkabelgerät dnach einem der vorhergehenden Ansprüchen in demdas Ajustierglied aus plastischen Materialien mit elastischen Eigenschaften geformt ist.